Europäisches Patentamt

European Patent Office

Office européen des brevets

(11) Publication number: **0 028 264**

**B1**

## (12) EUROPEAN PATENT SPECIFICATION

(45) Date of publication of patent specification: **24.10.84**

(51) ln. Cl.³: **H 02 K 3/04, H 02 K 13/04**

(21) Application number: **80900792.5**

(22) Date of filing: **30.04.80**

(86) International application number:
**PCT/JP80/00092**

(87) International publication number:
**WO 80/02479 13.11.80 Gazette 80/26**

### (54) METHOD OF CONNECTING THE LEADS OF AN ARMATURE COIL TO A COMMUTATOR.

(30) Priority: **04.05.79 JP 56727/79**

(43) Date of publication of application:
**13.05.81 Bulletin 81/19**

(45) Publication of the grant of the patent:
**24.10.84 Bulletin 84/43**

(84) Designated Contracting States:
**DE FR GB**

(56) References cited:
**DE-A-2 739 730**
**FR-A-1 337 545**
**GB-A-1 446 162**
**JP-A-50 127 103**
**JP-B-43 022 388**
**JP-Y-41 021 167**
**US-A-2 790 101**
**US-A-3 734 382**
**US-A-3 848 792**
**US-A-4 063 673**

(73) Proprietor: **MITSUBISHI DENKI KABUSHIKI KAISHA**
**2-3, Marunouchi 2-chome Chiyoda-ku Tokyo 100 (JP)**

(72) Inventor: **HAMANO, Isao**
**Mitsubishi Denki K.K. Himeji Seisakusho**
**840, Chiyoda-cho Himeji-shi Hyogo 670 (JP)**
Inventor: **YABUNAKA, Kiyoshi**
**Mitsubishi Denki K.K. Himeji Seisakusho**
**840, Chiyoda-cho Himeji-shi Hyogo 670 (JP)**

(74) Representative: **Jenkins, Richard Gray et al**
**R.G.C. Jenkins & Co. 12-15, Fetter Lane**
**London EC4A 1PL (GB)**

Courier Press, Leamington Spa, England.

## Description

The present invention relates to a method of connecting the leads of an armature coil, for a starter motor for an internal combustion engine for example, to the segments of a commutator.

A conventional method for connecting the leads of an armature coil to a commutator will be described with reference to figures 1a, 1b, and 2 to 5.

Figures 1a and 1b are a front view and cross-sectional view respectively of a conventional armature, with figure 1b being taken along the line A—A in figure 1a;

Figure 2 is a schematic view of ultrasonic welding apparatus employed in welding the leads of the armature coil shown in figure 1 with the segments of the commutator also shown in figure 1;

Figure 3 is a schematic view of a respective lead of the armature coil illustrating the forces generated by the ultrasonic vibrations;

Figure 4 is a diagram representing the effects of the vibrations; and

Figure 5 is an enlarged fragmentary view of the coil lead shown in figure 3;

In these figures, the reference numeral (1) designates an armature core; (2) designates a shaft carrying the core (1); (3) designates a gear member formed at the end of the shaft (2) by rolling or machining; (4) designates a commutator also mounted on the shaft (1); (5) designates segments of the commutator (4); (6) designates a moulded substrate to which the segments (5) are bonded; (7) designates the leads of an armature coil; (7a), (7b) designate the ends of the armature coil leads (7) which are connected to the segments (5) by the ultrasonic welding; and (8) designates slots formed in the armature core (1) in which the armature coil leads (7) are held in a wound form.

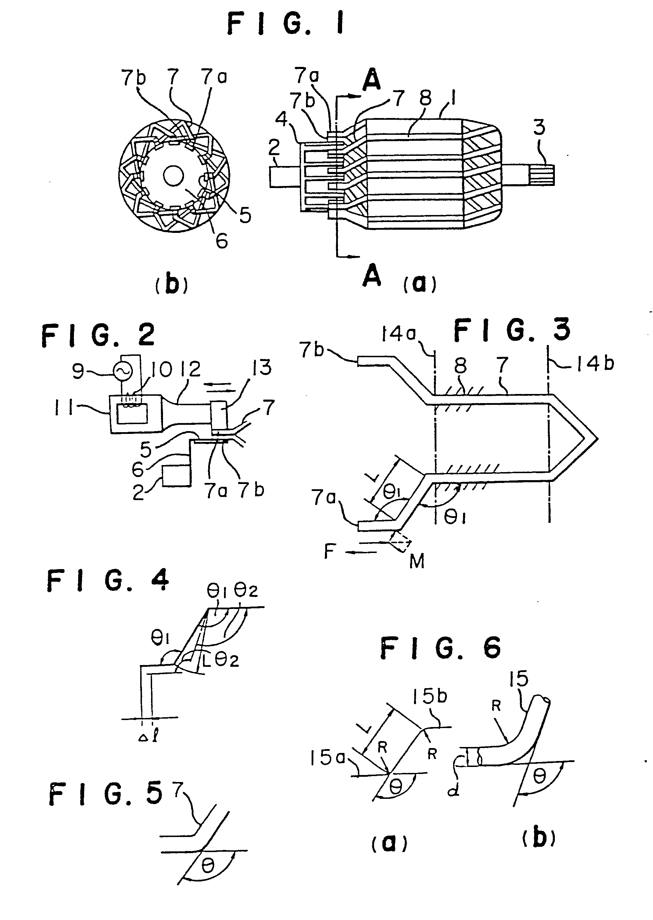

Turning to figure 2, the reference numeral (8) designates a power source for generating an ultrasonic waveform; (10) designates a coil; (11) designates a megnetostriction element for converting the ultrasonic waveform to mechanical vibrations; (12) designates a welding horn for concentrating the vibratory energy of the magnetostriction element (11); and (13) designates a welding tip for applying vibrations to the ends (7a), (7b) of the armature leads to weld them to the surfaces of the segments (5).

Figure 3 is a schematic view of a respective lead (7) providing one loop of the coil wound on the armature core (1) in which forces generated by the vibrations during the ultrasonic welding in the method of Figure 2 are illustrated. The reference numerals (14a), (14b) designate the ends of the armature core (1). The lead (7) is bent at an angle $\theta_1$ to the slot (8) at the core end (14a) and the lead end (7a) is bent again through an angle $\theta_1$ a little distance from its extremity as shown. When the tip (13) is vibrated, a force is applied to this end (7a) in the direction F. A component M of the force F at right angles to the inner portion of the lead end (7a), which has a length L, results in the lead end being subjected to a bending moment of magnitude ML about the end of the core (1).

As shown in Figure 4, a vibratory force having an amplitude of $\Delta l$ may be applied to the lead end (7a) by the ultrasonic welding apparatus. Under such vibration, the lead end is urged to bend further at the existing angle in it, to decrease such angle from $\theta_1$ to $\theta_2$. The ultrasonic vibrations reach 20 to 30 kHz at the maximum and the lead end (7a) is repeatedly subject to bending stress, e.g. as many as several tens of thousands to several hundreds of thousands of times even in the course of a few seconds or a few tens of seconds. When the lead end is bent initially through the angle $\theta$ required for the winding of the armature coil such that the inner radius of curvature at the bend is zero as shown in figure 5, the maximum possible elongation is obtained in the outer-most layer of the lead end (7a) and consequently under the application of the repeated bending stress caused by the ultrasonic vibrations the lead eventually breaks.

U.S. Patent No. 2790101 and German Patent Application DE—A—2739730 show further arrangements in which the armature leads are bent prior to welding them to the segments of a commutator.

The present invention provides a method of connecting the leads of an armature coil to the segments of a commutator, in which cracking or breaking of the leads during ultrasonic welding is minimised by forming each lead so that it has a predetermined contour.

According to the invention, there is provided a method of connecting the leads of an armature coil to the segments of a commutator, in which the leads are inserted into slots in an armature core in a wound form with the ends of the leads projecting from the slots, the ends of the leads are bent at their slot insertion portions and back again at their commutator segment attachment portions, and the bent ends are secured to the segments by ultrasonic welding, characterised in that the bends in the ends of the leads are circular and each have an inner radius of curvature of substantially 1.5 times the thickness of the associated lead at the bend in the direction of the radius of curvature.

The invention is described further, by way of example, with reference to figures 6a and 6b which are respectively a functional diagram and a structural view of a lead end for an armature coil employed in the method according to the present invention.

Figures 6a and 6b are diagrams illustrating the characteristic features of the method of the present invention, in which the leads of an armature coil, each having a diameter d are shaped into a form suitable for the armature winding by bending the leads to form bends which are curved, rather than sharply angled, and which have an inner radius of curvature R such that the radius of curvature R is substantially one and a half times the diameter d. In these figures, the reference numeral (15) designates a respective lead of the armature coil; (15a) designates one end of the armature coil lead which is welded to the segment (5) of the commutator (4) by ultrasonic welding; and (15b) designates a portion of the lead (15) which is inserted into the slot (8) of the armature core and is situated adjacent the core end (14a) and which is mould-bonded to the core, with an epoxy resin or such like, after being wound onto the core.

The theory of the present invention will now be described. When the lead (15) is bent at an angle $\theta$, the radius of curvature R is a function of $\theta$ as shown in the following equation:

$$R = \frac{d \cos \theta}{1 - \cos \theta} \qquad (1)$$

In this case, the elongation $\delta(\%)$ generated in the outer layer of the lead at the bend is given as follows:

$$\delta = \frac{\dfrac{d}{2}}{R + \dfrac{d}{2}} \times 100 \ (\%) \qquad (2)$$

Substituting equation (1) in equation (2), the elongation $\delta(\%)$ is expressed as follows:

$$\delta = \frac{\dfrac{d}{2}}{\dfrac{d \cos \theta}{1 - \cos \theta} + \dfrac{d}{2}} \times 100 \ (\%) \qquad (3)$$

If $\delta$ is smaller than the elongation limit inherently possessed by the material, for example copper or aluminium, used for the armature coil, a lead configuration which can withstand the bending fatigue resulting from the repeated stress caused by the ultrasonic welding may be obtained. In an experiment conducted by the applicant, it was found that no harmful cracking or breaking of the armature coil leads occurred during the ultrasonic welding process when an enamel-coated copper wire having a diameter of 2 mm and a radius of curvature, R, one and half times the diameter of the wire was used. Accordingly, the cracking or breaking of the coil leads occurring in the conventional method can be prevented by bending the ends of the armature coil leads at their slot insertion portions and back again at their commutator segment attachment portions to form bends whose inner radius of curvature has a value which is substantially one and a half times the wire diameter, before connecting the lead ends to the commutator segments by ultrasonic welding.

In the embodiment and the experiment described above, the wire for the armature coil has been considered as having a circular cross section. However, the present invention is not limited to the use of circular-section wire, and a similar effect can be obtained even by using a wire having a rectangular, polygonal or complex cross section so long as the radius of curvature at each bend is substantially 1.5 times the thickness of the wire at the bend in the direction of radius of curvature.

As described above, in accordance with the present invention, the cracking or breaking of the coil leads caused in the conventional ultrasonic welding method can be effectively prevented by bending the armature coil leads at the ends of the slot in the core so as to give an inner radius of curvature of substantially 1.5 times the diameter of the thickness of the coil leads at the bend before the ultrasonic welding is effected, when connecting the ends of the leads of an armature coil to the segments of a commutator by ultrasonic welding.

**Claim**

A method of connecting the leads (7) of an armature coil to the segments (5) of a commutator (4), in which the leads (7) are inserted into slots (8) in an armature core (1) in a wound form with the ends (7a, 7b) of the leads projecting from the slots (8), the ends (7a, 7b) of the leads (7) are bent at their slot insertion portions and back again at their commutator segment attachment portions, and the bent ends are secured to the segments (5) by ultrasonic welding, characterised in that the bends in the ends (7a, 7b) of the leads (7) are circular and each have an inner radius of curvature of substantially 1.5 times the thickness of the associated lead (7) at the bend in the direction of the radius of curvature.

**Patentanspruch**

Verfahren zum Verbinden der Leitungsdrähte (7) einer Ankerwicklung mit den Segmenten (5) eines Kommutators (4), wobei die Leitungsdrähte (7) in Schlitze (8) in einem Ankerkern (1) in gewundener Form mit den Enden (7a, 7b) der Leitungsdrähte aus den Schlitzen (8) herausragend eingesetzt werden, die Enden (7a, 7b) der Leitungsdrähte (7) an ihren Schlitzeinsetzabschnitten abgebogen und an ihren Anbringabschnitten an den Kommutator-segmenten wieder zurückgebogen sind und die abgebogenen Enden an den Segmenten (5) mittels Ultraschallschweißen verbunden sind, dadurch gekennzeichnet, daß die Abbiegungen an den Enden (7a, 7b) der Leitungsdrähte (7) kreisförmig sind und einen inneren Krümmungsradius von im wesentlichen dem 1,5- fachen der Dicke des zugehörigen Leitungsdrahtes (7) in Richtung des Krümmungsradius haben.

**Revendication**

Procédé pour connecter les conducteurs (7) d'un bobinage d'induit aus lames (5) d'un collecteur (4), selon lequel on insère les conducteurs (7) dans des fentes (8) d'un noyau d'induit (1) sous la forme d'un enroulement de façon que les tronçons d'extrémité (7a, 7b) des conducteurs ressortent des fentes (8), on plie les tronçons d'extrémité (7a, 7b) des conducteurs (7) une première fois au niveau de leur partie d'insertion dans les fentes et une deuxième fois en arrière au niveau de leur partie de liaison aux lames du collecteur, et on fixe les tronçons d'extrémité pliés aux lames (5) par soudage ultrasonique, caractérisé en ce que les pliures des tronçons d'extrémité (7a, 7b) des conducteurs (7) sont circulaires et présentent chacune un rayon intérieur de courbure sensiblement égal à 1,5 fois l'épaisseur du conducteur associé (7) au niveau de la pliure dans la direction du rayon de courbure.

# F I G. 1

(b)

(a)

# F I G. 2

# F I G. 3

# F I G. 4

# F I G. 6

# F I G. 5

(a)

(b)